# EUROPEAN PATENT SPECIFICATION

(11) **EP 2 960 574 B1**
(45) Date of publication and mention of the grant of the patent: **26.07.2017**
(21) Application number: 15174160.0
(22) Date of filing: 26.06.2015
(51) Int. Cl.: F21S 8/10, B60Q 1/00, B60Q 1/26

(54) **VEHICULAR LAMP**
FAHRZEUGLAMPE
LAMPE VÉHICULAIRE

(30) Priority: 27.06.2014 JP 2014133190
(43) Date of publication of application: 30.12.2015
(73) Proprietor: Koito Manufacturing Co., Ltd., Tokyo 108-8711 (JP)
(72) Inventor: MOTOMURA, Kenichi, Shizuoka (JP); IYODA, Haruhiko, Shizuoka (JP)
(74) Representative: Gill Jennings & Every LLP

(56) References cited:
- DE-A1- 3 828 522
- DE-A1-102004 043 044
- DE-A1-102012 112 075
- JP-A- 2014 053 151
- JP-A- 2014 107 246
- US-A1- 2013 314 935

## Description

### TECHNICAL FIELD

The present invention relates to a vehicular lamp.

### BACKGROUND ART

Japanese Patent Application Laid-Open (Kokai) No. 2014-53151discloses a tail lamp for a vehicle that includes a first lamp unit disposed on a vehicle body and a second lamp unit disposed on a back door or a trunk lid (see Patent Document 1).

The back door or the trunk lid is opened and closed with respect to the vehicle body. Therefore, there are cases in which a small gap is provided between the two lamp units so as to prevent interference between the lamp units upon opening and closing the back door or the trunk lid.

In such cases, the gap between the lamp units stands out when the tail lamp is lit, which might degrade the appearance.

It is an object of the present invention to provide a vehicular lamp in which a gap between two mutually movable lamp units is made less noticeable so as to improve the appearance.

JP 2014-053151 discloses the most relevant background art.

### SUMMARY OF THE INVENTION

A vehicular lamp according to the present invention includes a first lamp unit and a second lamp unit that are adjacent to each other with a gap therebetween, in which
the first lamp unit includes:
a first lamp body;
a first lens cover that covers a front side of the lamp in the first lamp body to form a first lamp chamber between the first lens cover and the first lamp body; and
a first light source disposed in the first lamp chamber,
the first lens cover includes:
   a first emission surface from which light from the first light source is emitted;
   a first connection portion extending toward the first lamp body and connected to the first lamp body; and
   a first light control surface that is formed to be continuous with the first emission surface, and emits the light from the first light source forward of the lamp,
   the second lamp unit includes:
      a second lamp body;
      a second lens cover that covers a front side of the lamp in the second lamp body to form a second lamp chamber between the second lens cover and the second lamp body; and
      a second light source disposed in the second lamp chamber,
      the second lens cover includes:
         a second emission surface from which light from the second light source is emitted;
         a second connection portion extending toward the second lamp body and connected to the second lamp body; and
         a second light control surface that is formed to be continuous with the second emission surface, and emits the light from the second light source forward of the lamp, and
         the first light control surface and the second light control surface are disposed continuous with each other with the gap therebetween, the first light control surface extending farther than the first connection portion in a direction toward the second light control surface, the second light control surface extending farther than the second connection portion in a direction toward the first light control surface; and
         a first reflecting surface that reflects the light from the first light source toward the first light control surface may be provided between the first connection portion and the first light control surface in the first lens cover, and a second reflecting surface that reflects the light from the second light source toward the second light control surface may be provided between the second connection portion and the second light control surface in the second lens cover.

According to the vehicular lamp with the configuration described above, when the first light source of the first lamp unit and the second light source of the second lamp unit are lit, light is emitted from the first light control surface of the first lens cover, and light is emitted from the second control surface of the second lens cover. Accordingly, even in the case where a small gap is formed between the first lamp unit and the second lamp unit, a non-light-emitting area that is formed between the first lamp unit and the second lamp unit and that does not emit light can be made smaller than that of a conventional vehicular lamp, when the lamp is lit. Thus, it is possible to make the gap between the first lamp unit and the second lamp unit less noticeable so as to improve the appearance.

According to the vehicular lamp with the configuration described above, since the light from the first light source is reflected by the first reflecting surface toward the first light control surface, it is possible to more efficiently guide the light to the first light control surface. Similarly, it is possible to more efficiently guide the light from the second light source to the second light control surface. Thus, it is possible to make the gap between the first lamp unit and the second lamp unit further less noticeable, and thus to further improve the appearance.

In the vehicular lamp according to the present invention, a first groove portion may be formed in a surface of the first connection portion facing the second lamp unit, and one of two side surfaces of the first groove portion may be a part of the first reflecting surface. Further, a second groove portion may be formed in a surface of the second connection portion facing the first lamp unit, and one of two side surfaces of the second groove portion may be a part of the second reflecting surface.

According to the vehicular lamp with the configuration described above, it is possible to increase the area of the first reflecting surface by forming the first groove portion and thus to increase the light quantity of the reflected light, while maintaining the first connection portion sufficiently large to ensure the connection strength between the first lens cover and the first lamp body. Similarly, it is possible to increase the area of the second reflecting surface and thus to increase the light quantity of the reflected light, while maintaining the second connection portion sufficiently large. Thus, it is possible to more efficiently guide light to the first light control surface and the second light control surface, and thus to further improve the appearance.

In the vehicular lamp according to the present invention, the first lamp unit may include, in the first lamp chamber, a first light guide that guides the light of the first light source and emits the light forward of the lamp, and a part of the light emitted from the first light guide may reache the first light control surface. The second lamp unit may include, in the second lamp chamber, a second light guide that guides the light of the second light source and emits the light forward of the lamp, and a part of the light emitted from the second light guide may reache the second light control surface.

According to the vehicular lamp with the configuration described above, the use of the first light guide and the second light guide makes it possible to increase the light-emitting area of the entire lamp while preventing an increase in the number of light sources in the entire lamp. Further, the use of the first light guide and the second light guide makes it possible to prevent generation of point lights which might be generated in the case where plural light sources are arranged at predetermined intervals, and thus to improve the appearance of the lamp.

In the vehicular lamp according to the present invention, the first lens cover and the first light guide may be integrally molded or fixed in close contact with each other, and the second lens cover and the second light guide may be integrally molded or fixed in close contact with each other.

According to the vehicular lamp with the configuration described above, light can be efficiently guided from the first light guide to the first light control surface without passing through an air layer. Similarly, light can be more efficiently guided from the second light source to the second light control surface. Thus, it is possible to make the gap between the first lamp unit and the second lamp unit further less noticeable, and thus to further improve the appearance.

In the vehicular lamp according to the present invention, the first lens cover and the first light guide may have different refractive indices, and the second lens cover and the second light guide may have different refractive indices.

According to the vehicular lamp with the configuration described above, it is possible to prevent light from the first light guide from being refracted and needlessly spread in the plane of the first lens cover, and to prevent light from the second light guide from being refracted and needlessly spread in the plane of the second lens cover. Thus, it is possible to prevent portions of the first lens cover and the second lens cover that are not designed to be light-emitting areas from appearing as light-emitting areas from the front of the lamp, and thus to maintain a good appearance of the lamp.

In the vehicular lamp according to the present invention, the first lens cover and the first light guide may have different colors, and the color of the first light guide may have a higher transmittance at a wavelength of the light emitted from the first light source than the color of the first lens cover. Further, the second lens cover and the second light guide may have different colors, and the color of the second light guide may have a higher transmittance at a wavelength of the light emitted from the second light source than the color of the second lens cover.

According to the vehicular lamp with the configuration described above, since the color of the first light guide is a color different from that of the first lens cover and having a higher transmittance, it is possible to increase the light guiding efficiency in the first light guide. Similarly, it is possible to increase the light guiding efficiency in the second light guide. Thus, it is possible to more efficiently guide light to the first light control surface and the second light control surface. Therefore, it is possible to make the gap between the first lamp unit and the second lamp unit further less noticeable, and thus to further improve the appearance.

According to the present invention, it is possible to provide a vehicular lamp in which a gap between two mutually movable lamp units is made less noticeable so as to improve the appearance.

### BRIEF DESCRIPTION OF THE DRAWINGS

FIG. 1 is a perspective view of a vehicle provided with vehicular lamps as viewed from the rear.
FIG. 2 is a front view of the vehicular lamp disposed at the rear of the vehicle.
FIG. 3 is a cross-sectional view of the vehicular lamp according to a first embodiment, taken along line A-A in FIG. 2.
FIG. 4 is an enlarged cross-sectional view of a part of a first lamp unit and a second lamp unit illustrated in FIG. 3.
FIG. 5 is a horizontal cross-sectional view of a vehicular lamp according to a conventional example.
FIG. 6 is a cross-sectional view of a vehicular lamp according to a second embodiment, taken along line A-A in FIG. 2.
FIG. 7 is a vertical cross-sectional view of a first lens cover and a second lens cover illustrated in FIG. 6.
FIG. 8 is a cross-sectional view of a vehicular lamp according to a third embodiment, taken along line A-A in FIG. 2.
FIG. 9 is an enlarged cross-sectional view of a part of a first lamp unit and a second lamp unit illustrated in FIG. 8.
FIG. 10 is a cross-sectional view of a vehicular lamp according to a modification of the third embodiment, taken along line A-A in FIG. 2.

### MODES FOR CARRYING OUT THE INVENTION

Exemplary embodiments of a vehicular lamp according to the present invention will be described with reference to the drawings.

### (First Embodiment)

First, a description will be given of a vehicular lamp according to a first embodiment.

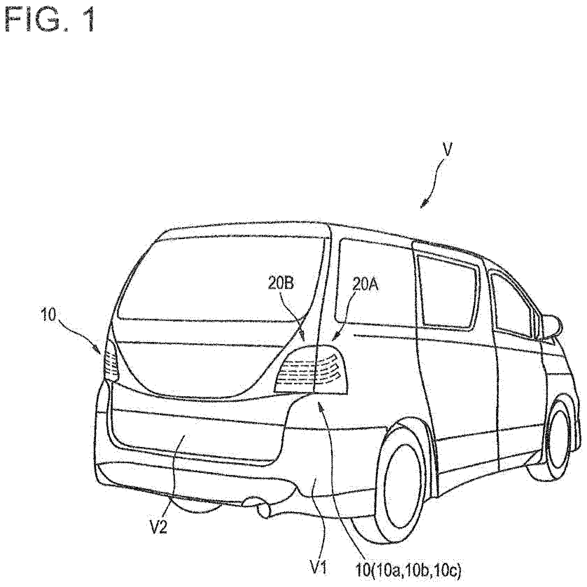

FIG. 1 is a perspective view of a vehicle V provided with vehicular lamps 10 as viewed from the rear.

As illustrated in FIG. 1, the vehicular lamps 10 are disposed at the rear of the vehicle V. The vehicle V includes a back door V2 at the rear of a vehicle body V1. The back door V2 is rotatably coupled at an upper edge portion thereof to the vehicle body V1. When the back door V2 is rotated about the portion coupled to the vehicle body V1, the rear of the vehicle body V1 is opened and closed. The vehicular lamps 10 are provided at the right and left rear of the vehicle V. The vehicular lamps 10 provided at the right and left are tail lamps of the vehicle V, and are symmetrically configured. In the following, the vehicular lamp 10 provided at the right rear of the vehicle V will be described by way of example.

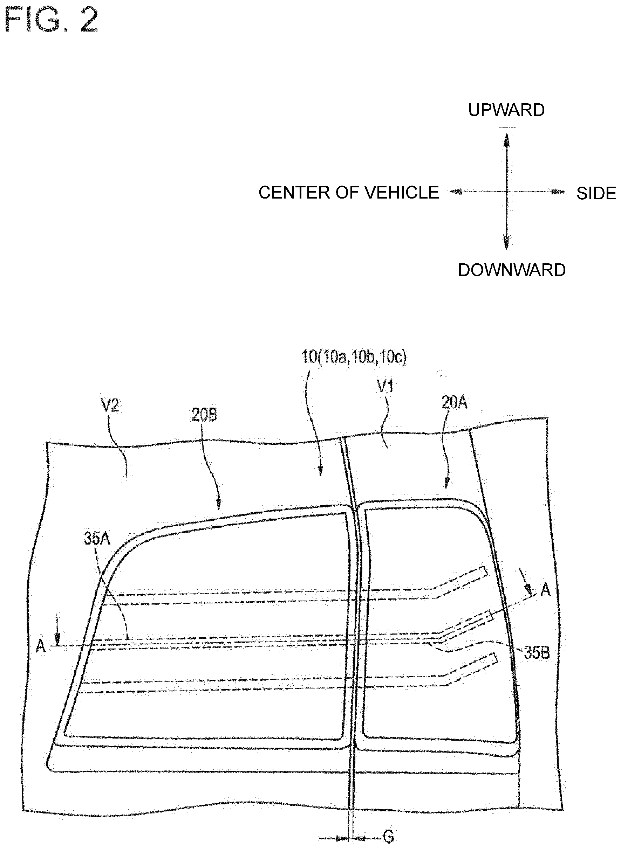

FIG. 2 is a front view of the vehicular lamp 10 disposed at the rear of the vehicle V.

As illustrated in FIG. 2, the vehicular lamp 10 includes a first lamp unit 20A and a second lamp unit 20B. The first lamp unit 20A and the second lamp unit 20B are disposed adjacent to each other in a vehicle width direction. The first lamp unit 20A is mounted on the vehicle body V1 which is a fixed part of the vehicle V. The second lamp unit 20B is mounted on a back door V2 which is a movable part that is movable with respect to the vehicle body V1. The first lamp unit 20A and the second lamp unit 20B are adjacent to each other with a small gap G therebetween when the back door V2 is closed.

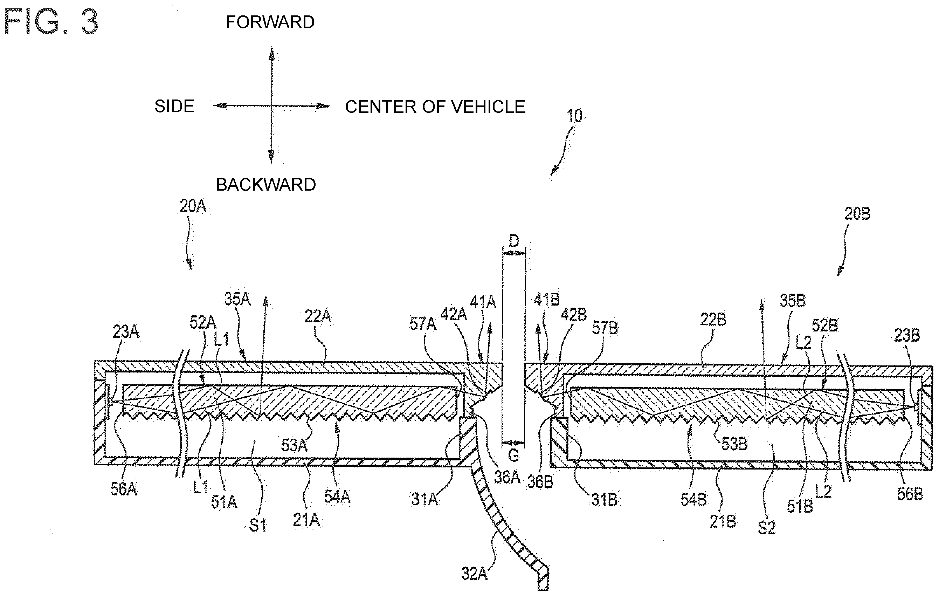

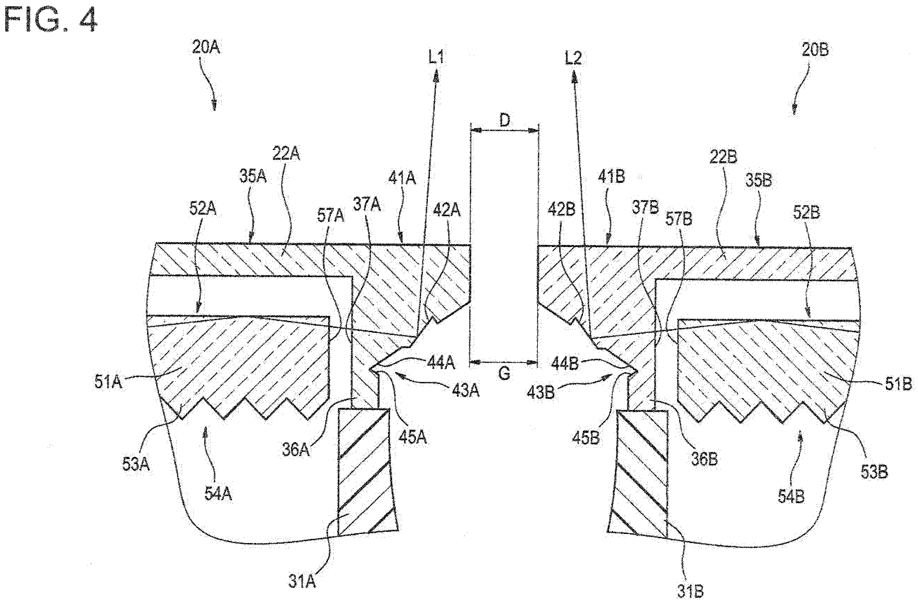

FIG. 3 is a cross-sectional view of the vehicular lamp 10 according to the first embodiment, taken along line A-A in the direction of the arrows in FIG. 2. FIG. 4 is an enlarged cross-sectional view of a part of the first lamp unit 20A and the second lamp unit 20B. Note that in this embodiment, the front of the lamp is the first lens cover 22A side (upward direction in FIG. 3) of the vehicular lamp 10. Further, the rear of the lamp is the first lamp body 21A side (downward direction in FIG. 3) opposite to the front of the lamp.

As illustrated in FIG. 3, the first lamp unit 20A of the vehicular lamp 10 according to the first embodiment includes a first lamp body 21A, a first lens cover 22A, and a first light source 23A.

The first lamp body 21A is formed of resin, and is mounted on the vehicle body V1. The first lamp body 21A includes, at its peripheral edge, a first support wall 31A protruding forward. Thus, the first lamp body 21A is formed in a recessed shape that is open at the front. Further, the first lamp body 21A includes, at its peripheral edge, a first fixed wall 32A protruding rearward. The first fixed wall 32A is fixed to the vehicle body V1.

The first lens cover 22A is formed of a light-transmissive resin, and is attached to the first lamp body 21A to cover a front side of the lamp in the first lamp body 21A. By attaching the first lens cover 22A to the first lamp body 21A, a hermetically sealed first lamp chamber S1 is formed inside the first lamp unit 20A. A part of a front surface of the first lens cover 22A is a first emission surface 35A (see FIG. 2). Light of the first light source 23A is emitted from the first emission surface 35A.

As illustrated in FIG. 4, the first lens cover 22A includes, at its peripheral edge, a first connection portion 36A extending toward the first lamp body 21A. The first connection portion 36A abuts at its end face an end face of the first support wall 31A of the first lamp body 21A. The first connection portion 36A and the first support wall 31A are tightly connected and sealed by welding or bonding, so that the first lamp chamber S1 is hermetically sealed.

The first lens cover 22A includes a first light control surface 41A. A peripheral edge of the first lens cover 22A extends outward, and the first light control surface 41A is provided at the extending portion of the peripheral edge of the first lens cover 22A. The first light control surface 41A is formed to be flush with the first emission surface 35A, and is formed to be continuous with the first emission surface 35A. Similar to the first emission surface 35A, the first light control surface 41A emits the light from the first light source 23A toward the front of the lamp.

The first lens cover 22A is provided with a first reflecting surface 42A between the first connection portion 36A and the first light control surface 41A. The first reflecting surface 42A is inclined outward from the first connection portion 36A toward the first light control surface 41A as viewed from the front-rear direction. The first reflecting surface 42A reflects the light from the first light source 23A toward the first light control surface 41A.

Further, in the first lens cover 22A, a first groove portion 43A is formed in a surface of the first connection portion 36A facing the second lamp unit 20B. The first groove portion 43A is formed in a V-shape in a cross-sectional view. The first groove portion 43A includes side surfaces 44A and 45A. Of these, the side surface 44A at the first light control surface 41A side is continuous with the first reflecting surface 42A, and forms a part of the first reflecting surface 42A.

Further, the first lamp unit 20A includes a first light guide 51A in the first lamp chamber S1 (see FIG. 3). The first light guide 51A is molded from a light-transmissive resin material, and is formed in a rod shape. The first light guide 51A is disposed in a longitudinal direction of the first lamp unit 20A. A surface of the first light guide 51A at the first lens cover 22A side is a light guide emission surface 52A. Further, a surface of the first light guide 51A opposite to the light guide emission surface 52A is a light guide reflecting surface 54A in which plural steps 53A are formed. The light guide reflecting surface 54A is disposed to face the first lamp body 21A (see FIG. 3).

The first light guide 51A is disposed in the vicinity of a surface of the first lens cover 22A at the first lamp chamber S1 side. An end face of the first light guide 51A is a light guide incident surface 56A. The first light source 23A is disposed to face the light guide incident surface 56A of the first light guide 51A (see FIG. 3). Further, another end face of the first light guide 51A is a light guide end face 57A. The light guide end face 57A is disposed in the vicinity of the first connection portion 36A.

As illustrated in FIG. 3, the second lamp unit 20B includes a second lamp body 21B, a second lens cover 22B, and a second light source 23B.

The second lamp body 21B is formed of resin, and is mounted on the back door V2. The second lamp body 21B includes, at its peripheral edge, a second support wall 31B protruding forward. Thus, the second lamp body 21B is formed in a recessed shape that is open at the front.

The second lens cover 22B is formed of a light-transmissive resin, and is attached to the second lamp body 21B to cover a front side of the lamp in the second lamp body 21B. By attaching the second lens cover 22B to the second lamp body 21B, a hermetically sealed second lamp chamber S2 is formed inside the second lamp unit 20B. A part of a front surface of the second lens cover 22B is a second emission surface 35B (see FIG. 2). Light of the second light source 23B is emitted from the second emission surface 35B.

As illustrated in FIG. 4, the second lens cover 22B includes, at its peripheral edge, a second connection portion 36B extending toward the second lamp body 21B. The second connection portion 36B abuts at its end face an end face of the second support wall 31B of the second lamp body 21B. The second connection portion 36B and the second support wall 31B are tightly connected and sealed by welding or bonding, so that the second lamp chamber S2 is hermetically sealed.

The second lens cover 22B includes a second light control surface 41B. A peripheral edge of the second lens cover 22B extends outward, and the second light control surface 41B is provided at the extending portion of the peripheral edge of the second lens cover 22B. The second light control surface 41B is formed to be flush with the second emission surface 35B, and is formed to be continuous with the second emission surface 35B. Similar to the second emission surface 35B, the second light control surface 41B emits the light from the second light source 23B toward the front of the lamp.

The second lens cover 22B is provided with a second reflecting surface 42B between the second connection portion 36B and the second light control surface 41B. The second reflecting surface 42B is inclined outward from the second connection portion 36B toward the second light control surface 41B as viewed from the front-rear direction. The second reflecting surface 42B reflects the light from the second light source 23B toward the second light control surface 41B.

Further, in the second lens cover 22B, a second groove portion 43B is formed in a surface of the second connection portion 36B facing the first lamp unit 20A. The second groove portion 43B is formed in a V-shape in a cross-sectional view. The second groove portion 43B includes side surfaces 44B and 45B. Of these, the side surface 44B at the second light control surface 41B side is continuous with the second reflecting surface 42B, and forms a part of the second reflecting surface 42B.

Further, the second lamp unit 20B includes a second light guide 51B in the second lamp chamber S2 (see FIG. 3). The second light guide 51B is molded from a light-transmissive resin material, and is formed in a rod shape. The second light guide 51B is disposed in a longitudinal direction of the second lamp unit 20B. A surface of the second light guide 51B at the second lens cover 22B side is a light guide emission surface 52B. Further, a surface of the second light guide 51B opposite to the light guide emission surface 52B is a light guide reflecting surface 54B in which plural steps 53B are formed. The light guide reflecting surface 54B is disposed to face the second lamp body 21B (see FIG. 3).

The second light guide 51B is disposed in the vicinity of a surface of the second lens cover 22B at the second lamp chamber S2 side. An end face of the second light guide 51B is a light guide incident surface 56B. The second light source 23B is disposed to face the light guide incident surface 56B of the second light guide 51B. Further, another end face of the second light guide 51B is a light guide end face 57B. The light guide end face 57B is disposed in the vicinity of the second connection portion 36B.

The first lamp unit 20A and the second lamp unit 20B with the configurations described above are disposed such that the first light control surface 41A and the second light control surface 41B are continuous with each other with the small gap G therebetween. Further, the first light control surface 41A of the first lamp unit 20A extends farther than the first connection portion 36A in a direction toward the second light control surface 41B of the second lamp unit 20B, and the second light control surface 41B of the second lamp unit 20B extends farther than the second connection portion 36B in a direction toward the first light control surface 41A of the first lamp unit 20A.

Next, a description will be given of an optical path at the time when the vehicular lamp with the configuration described above is lit.

In the first lamp unit 20A, when the first light source 23A is lit, a part of light L1 is incident from the light guide incident surface 56A of the first light guide 51A into the first light guide 51A, and is guided in the first light guide 51A in a longitudinal direction thereof. At this point, the light L1 is reflected by the steps 53A of the light guide reflecting surface 54A of the first light guide 51A, and is emitted from the light guide emission surface 52A. The light L1 emitted from the light guide emission surface 52A is then emitted forward of the lamp from the first emission surface 35A of the first lens cover 22A through the first lens cover 22A.

Further, another part of the light L1 guided in the first light guide 51A is emitted from the light guide end face 57A of the first light guide 51A. The light L1 emitted from the light guide end face 57A of the first light guide 51A is incident on an inner surface 37A of the first lens cover 22A facing the light guide end face 57A of the first light guide 51A, and reaches the first light control surface 41A. Further, the other part of the light L1 incident on the first connection portion 36A is reflected by the first reflecting surface 42A toward the first light control surface 41A, and reaches the first light control surface 41A. The light L1 having reached the first light control surface 41A is then emitted forward of the lamp from the first light control surface 41A.

In this way, in the first lamp unit 20A, when the first light source 23A is lit, the light L1 guided through the rod-shaped first light guide 51A is emitted forward of the lamp from the first emission surface 35A and the first light control surface 41A of the first lens cover 22A. Thus, the first lamp unit 20A is lit in the form of a line.

Similarly, in the second lamp unit 20B, when the second light source 23B is lit, a part of light L2 guided through the rod-shaped second light guide 51B is emitted forward of the lamp from the second emission surface 35B and the second light control surface 41B of the second lens cover 22B. Thus, the second lamp unit 20B is lit in the form of a line.

In this way, in the vehicular lamp 10, when the first light source 23A of the first lamp unit 20A and the second light source 23B of the second lamp unit 20B are lit, linear lights are emitted forward of the lamp from the first lamp unit 20A and the second lamp unit 20B, and the linear lights are substantially continuous and appear to be connected to each other.

The vehicle V is configured such that the back door V2 is openable and closable with respect to the vehicle body V1 (see FIG. 1). Therefore, it is needed for the vehicular lamp 10 including a tail lamp disposed across the vehicle body V1 and the back door V2 to provide the small gap G between the first lamp unit 20A at the vehicle body V1 side and the second lamp unit 20B at the back door V2 side so as to prevent interference between the first lamp unit 20A and the second lamp unit 20B upon opening and closing the back door V2.

Further, in some cases, in order to hide the connected portion between the first support wall 31A of the first lamp body 21A and the first connection portion 36A of the first lens cover 22A and the connected portion between the second support wall 31B of the second lamp body 21B and the second connection portion 36B of the second lens cover 22B when the back door V2 is open and thus to improve the appearance, partitions covering the outer peripheries of the connected portions in the first lamp unit 20A and the second lamp unit 20B may be formed in the first lamp body 21A and the second lamp body 21B. In the case where such partitions are formed, the gap G between the first lamp unit 20A and the second lamp unit 20B is increased.

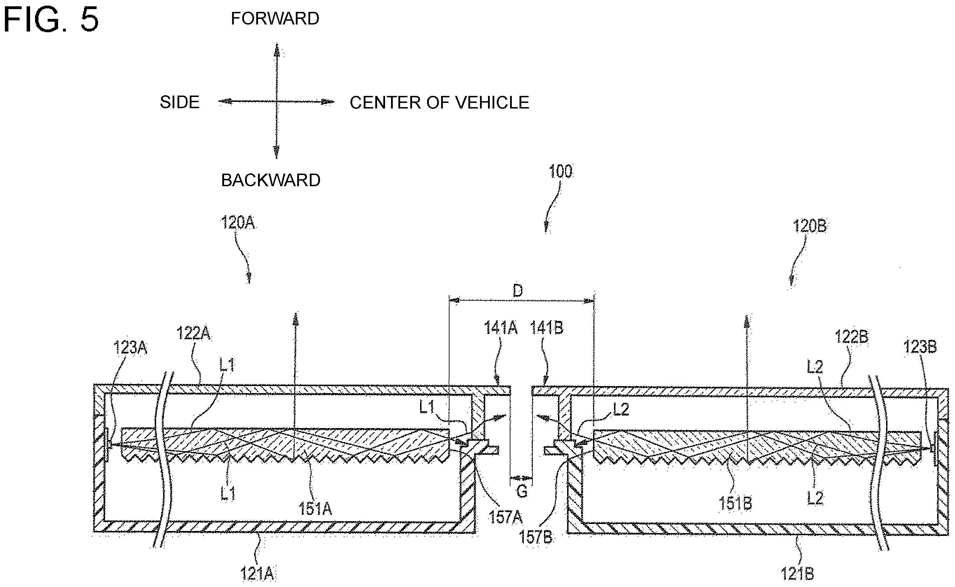

FIG. 5 is a horizontal cross-sectional view of a vehicular lamp 100 according to a conventional example.

As illustrated in FIG. 5, the vehicular lamp 100 according to the conventional example includes a first lamp unit 120A that includes a first lens cover 122A not having a first light control surface 41A and a second lamp unit 120B that includes a second lens cover 122B not having a second light control surface 41B.

In the vehicular lamp 100, light L1 emitted from a light guide end face 157A of a first light guide 151A does not reach a peripheral edge 141A of a first lens cover 122A. Further, light L2 emitted from a light guide end face 157B of a second light guide 151B does not reach a peripheral edge 141B of a second lens cover 122B. In this way, in the conventional vehicular lamp 100, light leaked from the light guide end face 157A of the first light guide 151A and the light guide end face 157B of the second light guide 151B is not effectively used as light for illuminating forward of the lamp. Accordingly, in the vehicular lamp 100, a non-light-emitting area D that is formed between the first lamp unit 120A and the second lamp unit 120B when the lamp is lit is significantly greater than a gap G.

Further, in the vehicular lamp 100, partitions covering a connected portion between the first lens cover 122A and a first lamp body 121A and a connected portion between the second lens cover 122B and a second lamp body 121B are formed in the first lamp body 121A and the second lamp body 121B. Thus, the gap G between the first lamp unit 120A and the second lamp unit 120B is increased, so that the non-light-emitting area D including the gap G between the first lamp unit 120A and the second lamp unit 120B is further increased and becomes noticeable when the lamp is lit.

On the other hand, according to the vehicular lamp 10 of the present embodiment, the first lamp unit 20A includes the first light control surface 41A that is formed to be continuous with the first emission surface 35A and that emits the light L1 from the first light source 23A forwardt of the lamp, and the second lamp unit 20B includes the second light control surface 41B that is formed to be continuous with the second emission surface 35B and that emits the light L2 from the second light source 23B forward of the lamp. Further, the first light control surface 41A and the second light control surface 41B are disposed continuous with each other with the gap G therebetween. The first light control surface 41A extends farther than the first connection portion 36A in the direction toward the second light control surface 41B, and the second light control surface 41B extends farther than the second connection portion 36B in the direction toward the first light control surface 41A.

Accordingly, when the first light source 23A of the first lamp unit 20A and the second light source 23B of the second lamp unit 20B are lit, the light L1 is emitted from the first light control surface 41A of the first lens cover 22A, and the light L2 is emitted from the second light control surface 41B of the second lens cover 22B. Thus, when the lamp is lit, the width of a non-light-emitting area D that is formed between the first lamp unit 20A and the second lamp unit 20B and that does not emit light can be made substantially equal to that of the gap G formed between the first lamp unit 20A and the second lamp unit 20B (see FIGS. 3 and 4).

In this way, according to the vehicular lamp 10 of the present embodiment, the non-light-emitting area D that is formed between the first lamp unit 20A and the second lamp unit 20B and that does not emit light can be made smaller than that of the conventional example. Thus, it is possible to make the gap G between the first lamp unit 20A and the second lamp unit 20B less noticeable so as to improve the appearance.

Further, the first reflecting surface 42A is provided between the first connection portion 36A and the first light control surface 41A of the first lens cover 22A. Therefore, a part of the light L1 from the first light source 23A is reflected by the first reflecting surface 42A toward the first light control surface 41A. Thus, it is possible to more efficiently guide the light L1 to the first light control surface 41A. Similarly, it is possible to more efficiently guide a part of the light L2 from the second light source 23B to the second light control surface 41B. In this way, according to the vehicular lamp 10 of the present embodiment, light that is leaked from an end face of a light guide and is not effectively used in the conventional example (see FIG. 5) can be effectively used as light that is emitted to the front of the lamp. Thus, it is possible to make the gap G between the first lamp unit 20A and the second lamp unit 20B further less noticeable, and thus to further improve the appearance.

Further, the first groove portion 43A is formed in the surface of the first connection portion 36A facing the second lamp unit 20B, and one side surface 44A of the first groove portion 43A forms a part of the first reflecting surface 42A. Therefore, it is possible to increase the area of the first reflecting surface 42A and thus to increase the light quantity of the reflected light, while maintaining the first connection portion 36A sufficiently large to ensure the connection strength between the first lens cover 22A and the first lamp body 21A. Similarly, it is possible to increase the area of the second reflecting surface 42B and thus to increase the light quantity of the reflected light, while maintaining the second connection portion 36B sufficiently large. Thus, it is possible to further efficiently guide light to the first light control surface 41A and the second light control surface 41B, while maintaining the connection strength between the first lens cover 22A and the first lamp body 21A and the connection strength between the second lens cover 22B and the second lamp body 21B.

Further, since the first groove portion 43A is formed in the first connection portion 36A, it is possible to locate a part of the first reflecting surface 42A to be closer to the light guide end face 57A of the first light guide 51A. Therefore, it is possible to reduce the gap between the light guide end face 57A of the first light guide 51A and the first reflecting surface 42A, and thus to improve the appearance of the first lens cover 22A from the front of the lamp when the lamp is lit. Similarly, since the second groove portion 43B is formed in the second connection portion 36B, it is possible to reduce the gap between the light guide end face 57B of the second light guide 51B and the second reflecting surface 42B, and thus to improve the appearance of the second lens cover 22B from the front of the lamp when the lamp is lit.

Further, since the first light guide 51A is provided in the first lamp chamber S1, and since the second light guide 51B is provided in the second lamp chamber S2, it is possible to increase the light-emitting area of the entire lamp while preventing an increase in the number of light sources in the entire lamp. Further, if plural light sources are arranged at predetermined intervals, point lights might be generated. According to the vehicular lamp 10 of the present embodiment, since the first light guide 51A and the second light guide 51B are used, it is possible to prevent point lights from being generated, and thus to improve the appearance of the lamp.

Further, in this embodiment, one of the first lamp unit 20A and the second lamp unit 20B is mounted on the fixed part of the vehicle body V1, and the other one is mounted on the movable part including the back door V2 that is movable with respect to the vehicle body V1. Therefore, the small gap G is formed between the first lamp unit 20A and the second lamp unit 20B.

As described above, according to the vehicular lamp 10 of the present embodiment, since the non-light-emitting area D that is formed between the first lamp unit 20A and the second lamp unit 20B and that does not emit light is smaller than that of the conventional example, it is possible to make the gap G between the first lamp unit 20A and the second lamp unit 20B less noticeable so as to improve the appearance.

### (Second Embodiment)

Next, a description will be given of a vehicular lamp 10A according to a second embodiment.

Note that elements identical to those of the vehicular lamp 10 of the above-described first embodiment bear the same reference numerals, and a description thereof will be omitted.

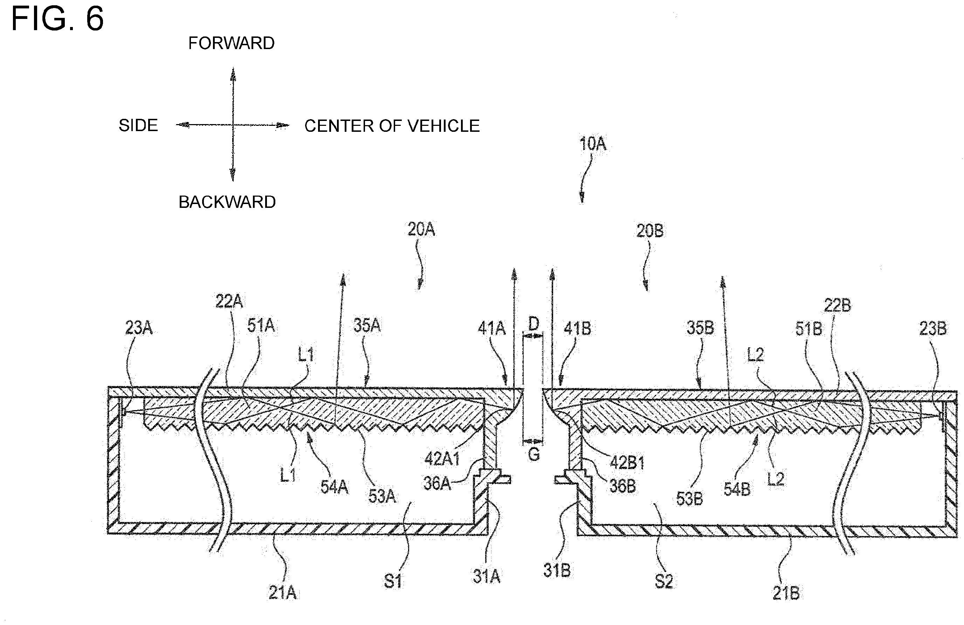

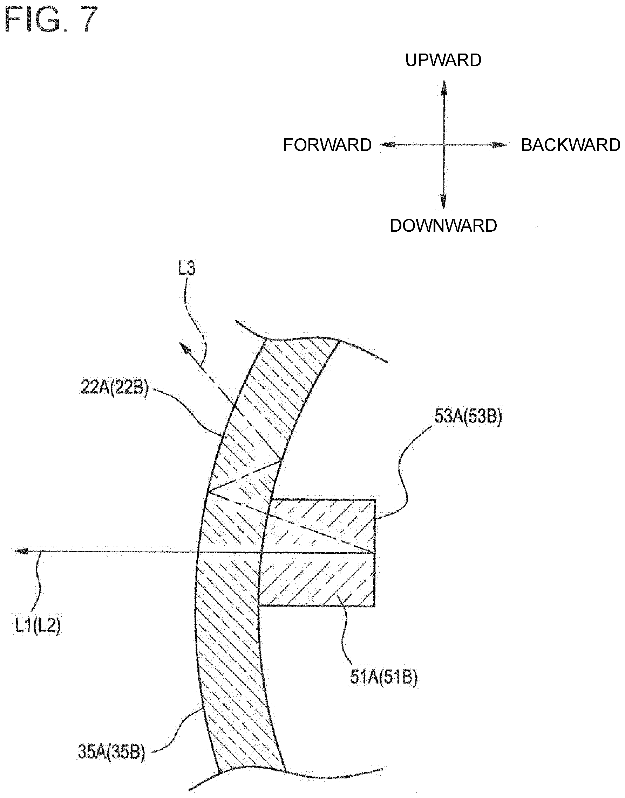

FIG. 6 is a cross-sectional view of the vehicular lamp 10A according to the second embodiment, taken along line A-A in FIG. 2. FIG. 7 is a vertical cross-sectional view of a first lens cover 22A and a second lens cover 22B.

As illustrated in FIGS. 6 and 7, the vehicular lamp 10A according to the second embodiment includes a first lamp unit 20A in which the first lens cover 22A and a first light guide 51A are integrated with each other, and a second lamp unit 20B in which the second lens cover 22B and a second light guide 51B are integrated with each other.

The first lens cover 22A and the first light guide 51A are integrally molded by simultaneous injection molding, for example. Similarly, the second lens cover 22B and the second light guide 51B are integrally molded by simultaneous injection molding, for example. Note that the first lens cover 22A and the first light guide 51A may be integrated by, for example, being bonded and fixed in close contact with each other. Similarly, the second lens cover 22B and the second light guide 51B may be integrated by, for example, being bonded and fixed in close contact with each other.

Further, the first lens cover 22A is provided with a first reflecting surface 42A1 having an arc-shaped cross section between a first connection portion 36A and a first light control surface 41A. Similarly, the second lens cover 22B is provided with a second reflecting surface 42B1 having an arc-shaped cross section between a second connection portion 36B and the second light control surface 41B.

As described above, according to the vehicular lamp 10A of the second embodiment, the first lens cover 22A and the first light guide 51A are integrally provided. Therefore, it is possible to cause the light guided in the first light guide 51A to reach the first light control surface 41A without passing through an air layer, and thus to more efficiently guide the light. Similarly, it is possible to more efficiently guide the light of the second light source 23B from the second light guide 51B to the second light control surface 41B. Thus, it is possible to make a gap G between the first lamp unit 20A and the second lamp unit 20B less noticeable, and thus to improve the appearance.

In the case where the first light guide 51A is provided integrally with or in close contact with the first lens cover 22A, the light from the first light source 23A having been guided through the first light guide 51A is spread in the plane of the first lens cover 22A, so that linear light from a first emission surface 35A of the first lamp unit 20A might be blurred (see light L3 in FIG. 7). Similarly, linear light from a second emission surface 35B of the second lamp unit 20B might be blurred.

In view of this, in the vehicular lamp 10A according to the second embodiment, the first lens cover 22A and the first light guide 51A have different refractive indices. Similarly, the second lens cover 22B and the second light guide 51B have different refractive indices.

In this embodiment, for instance, the first light guide 51A and the second light guide 51B are clear polycarbonate portions made of a colorless polycarbonate (hereinafter referred to as PC), and the first lens cover 22A and the second lens cover 22B are red acrylic portions made of a red acrylic resin. Thus, the clear PC portions have a higher refractive index than the red acrylic portions. Therefore, among light L1 and light L2 guided in the first light guide 51A and the second light guide 51B formed of the clear PC portions, lights with relatively small incident angles on the first lens cover 22A and the second lens cover 22B are totally reflected at interfaces with the first lens cover 22A and the second lens cover 22B formed of the red acrylic portions.

In this way, it is possible to prevent the light L1 and the light L2 from being needlessly spread in the planes of the first lens cover 22A and the second lens cover 22B formed of the red acrylic portions. Accordingly, it is possible to prevent portions of the first lens cover 22A and the second lens cover 22B that are not designed to be light-emitting areas from appearing as light-emitting areas from the front of the lamp, and thus to maintain a good appearance of the lamp.

Note that in the case where, in the vehicular lamp 10A, the first lens cover 22A and the first light guide 51A have different colors, the first light guide 51A preferably has a color whose transmittance at a wavelength of the light emitted from the first light source 23A is higher than a color of the first lens cover 22A. Similarly, in the case where the second lens cover 22B and the second light guide 51B have different colors, the second light guide 51B preferably has a color whose transmittance at a wavelength of the light emitted from the second light source 23B is higher than a color of the second lens cover 22B.

For example, if the color of both a light guide and a lens cover is red with a low transmittance, the light quantity of the light guided to the far side from the light source is reduced. According to the vehicular lamp 10A described above, it is possible to increase the light guiding efficiency in the first light guide 51A, and to increase the light guiding efficiency in the second light guide 51B. Thus, it is possible to efficiently guide light to the first light control surface 41A and the second light control surface 41B, and thus to further improve the appearance.

In this embodiment, the configuration has been described in which PC resin is used for each of the light guides 51A and 51B, and acrylic resin is used for each of the lens covers 22A and 22B. However, a configuration may be appropriately employed in which acrylic resin is used for each of the light guides 51A and 51B, and PC resin is used for each of the lens covers 22A and 22B.

### (Third Embodiment)

Next, a description will be given of a vehicular lamp 10B according to a third embodiment.

Note that elements identical to those of the vehicular lamp 10 of the above-described first embodiment bear the same reference numerals, and a description thereof will be omitted.

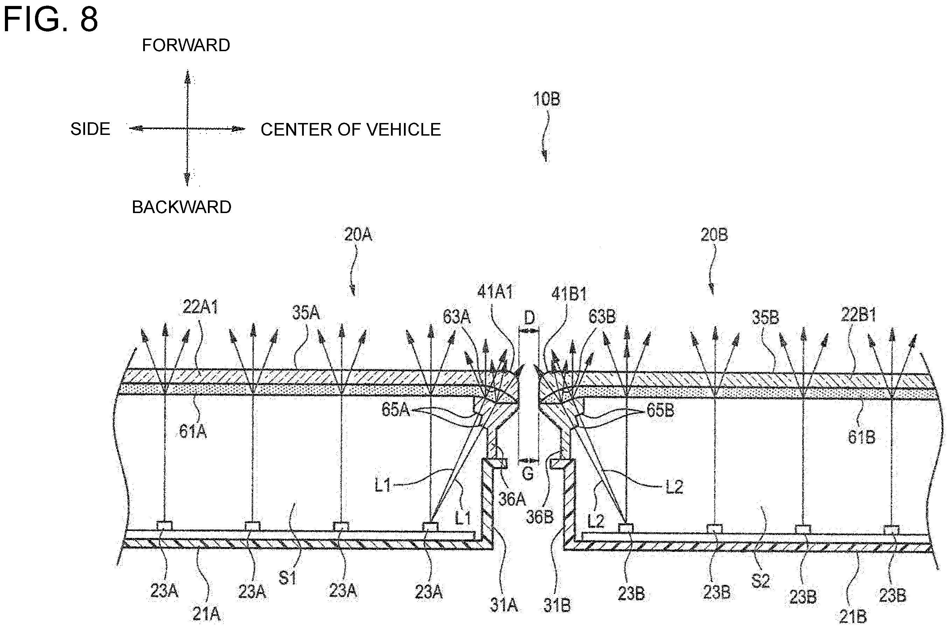

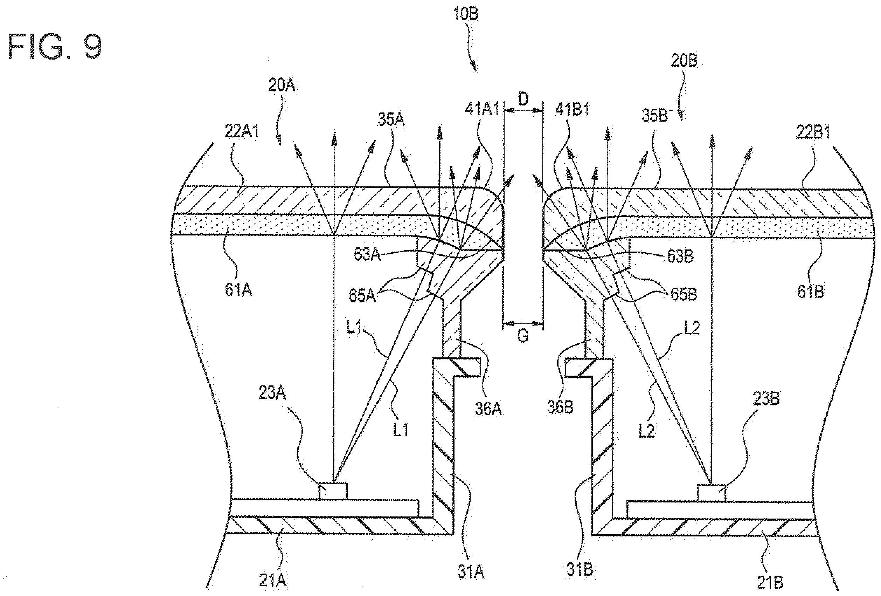

FIG. 8 is a cross-sectional view of the vehicular lamp 10B according to the third embodiment, taken along line A-A in FIG. 2. FIG. 9 is an enlarged cross-sectional view of a part of a first lamp unit 20A and a second lamp unit 20B.

As illustrated in FIG. 8, the vehicular lamp 10B according to the third embodiment includes a first lens cover 22A1 including a first light control surface 41A1 that is curved at its end on a second lamp unit 20B side and, and a second lens cover 22B1 including a second light control surface 41B1 that is curved at its end on a first lamp unit 20A side.

The first lamp unit 20A of this embodiment includes a first inner lens 61A in place of the first light guide 51A. The first inner lens 61A is formed in a rod shape, and is provided in close contact with a surface of the first lens cover 22A1 at the first lamp chamber S1 side. The first inner lens 61A contains a diffuser for diffusing light, and diffuses and emits the incident light.

A part of the first inner lens 61A extends to a back side of the first light control surface 41A1. In the first lens cover 22A1, an interface with the first inner lens 61A extending to the back of the first light control surface 41A1 is a first control light incident surface 63A. Further, in the first lamp unit 20A, plural first light sources 23A are arranged at intervals in a first lamp body 21A in a longitudinal direction of the first inner lens 61A.

As illustrated in FIG. 9, in the first lens cover 22A1, a first incident surface 65A is formed at the first lamp chamber S1 side between a first connection portion 36A and a first light control surface 41A1. The first incident surface 65A is a surface perpendicular to an optical path of light L1 emitted from the first light source 23A closest to a first connection portion 36A. The light L1 incident from the first incident surface 65A is guided to the first inner lens 61A with little refraction.

Further, as illustrated in FIG. 8, the second lamp unit 20B includes a second inner lens 61B in place of the second light guide 51B. The second inner lens 61B is formed in a rod shape, and is provided in close contact with a surface of the second lens cover 22B1 at the second lamp chamber S2 side. The second inner lens 61B contains a diffuser for diffusing light, and diffuses and emits the incident light.

A part of the second inner lens 61B extends to a back side of the second light control surface 41B1. In the second lens cover 22B1, an interface with the second inner lens 61B extending to the back of the second light control surface 41B1 is a second control light incident surface 63B. Further, in the second lamp unit 20B, plural second light sources 23B are arranged at intervals at the bottom of a second lamp body 21B in a longitudinal direction of the second inner lens 61B.

As illustrated in FIG. 9, in the second lens cover 22B1, a second incident surface 65B is formed at the second lamp chamber S2 side between a second connection portion 36B and a second light control surface 41B1. The second incident surface 65B is a surface perpendicular to an optical path of light L2 emitted from the second light source 23B closest to a second connection portion 36B. The light L2 incident from the second incident surface 65B is guided to the second inner lens 61B with little refraction.

In the first lamp unit 20A, a part of the light L1 emitted from each of the first light sources 23A is incident on the first inner lens 61A, is diffused by the first inner lens 61A, and is emitted from the first inner lens 61A. The light L1 emitted from the first inner lens 61A is then emitted forward of the lamp from the first emission surface 35A of the first lens cover 22A1.

Further, a part of the light L1 emitted from the first light source 23A closest to the first connection portion 36A is guided from the first incident surface 65A to a portion of the first inner lens 61A extending to the first control light incident surface 63A side of the first inner lens 61A, is diffused by the first inner lens 61A, and reaches the first light control surface 41A1. The light L1 having reached the first light control surface 41A1 is then emitted forward of the lamp from the first light control surface 41A1.

In this way, in the first lamp unit 20A, when each of the first light sources 23A is lit, the light L1 is diffused by the rod-shaped first inner lens 61A, and is emitted forward of the lamp from the first emission surface 35A and the first light control surface 41A1 of the first lens cover 22A1. Thus, the first lamp unit 20A is lit in the form of a line.

Similarly, in the second lamp unit 20B, when each of the second light sources 23B is lit, the light L2 is diffused by the rod-shaped second inner lens 61B, and is emitted forward of the lamp from the second emission surface 35B and the second light control surface 41B1 of the second lens cover 22B1. Thus, the second lamp unit 20B is lit in the form of a line.

In this way, according to the vehicular lamp 10B of the third embodiment, the first lamp unit 20A includes, in the first lamp chamber S1, the first inner lens 61A that diffuses the incident light L1 from the first light sources 23A, and a part of the first inner lens 61A extends to the first control light incident surface 63A side of the first light control surface 41A1. Further, the second lamp unit 20B includes, in the second lamp chamber S2, the second inner lens 61B that diffuses the incident light L2 from the second light sources 23B, and a part of the second inner lens 61B extends to the second control light incident surface 63B side of the second light control surface 41B1.

Therefore, according to the vehicular lamp 10B, it is possible to cause the first light control surface 41A1 to emit light over a wide range with the diffused light from the first inner lens 61A at the first control light incident surface 63Aside of the first light control surface 41A1. Further, it is possible to cause the second light control surface 41B1 to emit light over a wide range with the diffused light from the second inner lens 61B at the second control light incident surface 63B side of the second light control surface 41B1. Thus, it is possible to make a gap G between the first lamp unit 20A and the second lamp unit 20B further less noticeable, and thus to improve the appearance.

Further, since the first light control surface 41A1 is curved at its end on the second lamp unit 20B side, light is also emitted obliquely forward of the lamp (to the second lamp unit side) from the end. Similarly, since the second light control surface 41B1 is curved at its end on the first lamp unit 20A side, light is also emitted obliquely forward of the lamp (to the first lamp unit side) from the end. Therefore, even when the vehicular lamp 10B is viewed obliquely from the front, it is possible to make the gap G between the first lamp unit 20A and the second lamp unit 20B further less noticeable, and thus to improve the appearance.

Further, in the vehicular lamp 10B, the first lens cover 22A1 includes the first incident surface 65A perpendicular to the optical path of the light L1 from the first light source 23A such that the light incident from the first incident surface 65A is guided to the first inner lens 61A, and the second lens cover 22B1 includes the second incident surface 65B perpendicular to the optical path of the light L2 from the second light source 23B such that the light incident from the second incident surface 65B is guided to the second inner lens 61B.

Therefore, according to the vehicular lamp 10B, since a part of the light L1 from the first light source 23A is perpendicularly incident on the first incident surface 65A, it is possible to efficiently guide the light L1 from the first light source 23A linearly to an incident surface of a portion of the first inner lens 61A extending to the first control light incident surface 63A on the back of the first light control surface 41A1. Similarly, it is possible to efficiently guide a part of the light L2 from the second light source 23B linearly to an incident surface of a portion of the second inner lens 61B extending to the second control light incident surface 63B on the back of the second light control surface 41B1. Accordingly, it is possible to more efficiently guide the diffused light from the first inner lens 61A and the second inner lens 61B to the first light control surface 41A1 and the second light control surface 41B1, and thus to further improve the appearance.

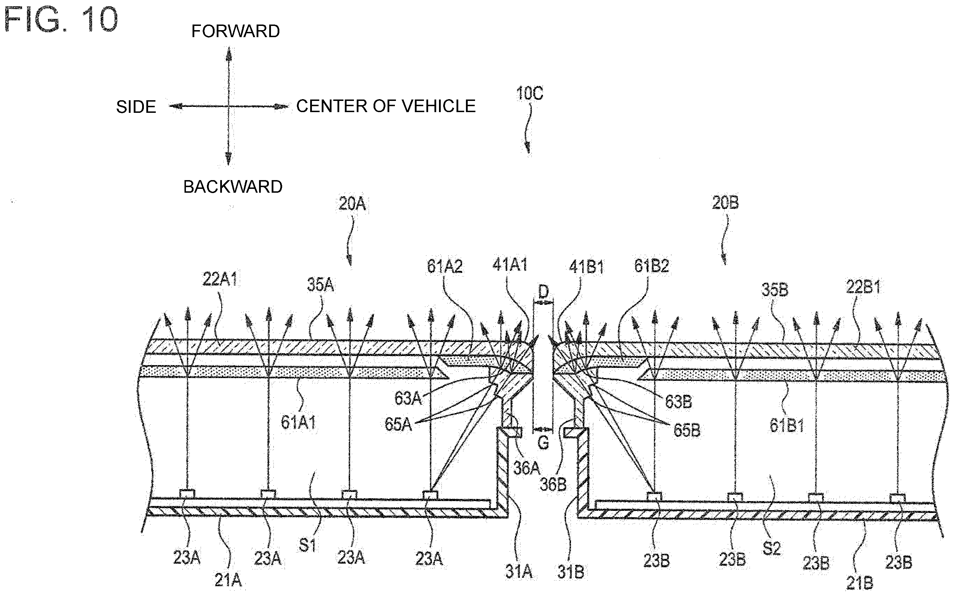

Note that the first inner lens 61A and the second inner lens 61B are not limited to those having the configurations described above. FIG. 10 is a cross-sectional view of a vehicular lamp 10C according to a modification of the third embodiment, taken along line A-A in FIG. 2.

As illustrated in FIG. 10, a first inner lens 61A may be divided into a portion 61A1 disposed in a first lamp chamber S1 and a portion 61A2 disposed on a back side of a first light control surface 41A1. Similarly, a second inner lens 61B may be divided into a portion 61B1 disposed in a second lamp chamber S2 and a portion 61B2 disposed on a back side of a second light control surface 41B1.

Even with this configuration, it is possible to cause the first light control surface 41A1 to emit light over a wide range with the diffused light from the portion 61A2 of the first inner lens 61A disposed on the back side of the first light control surface 41A1. Further, it is possible to cause the second light control surface 41B1 to emit light over a wide range with the diffused light from the portion 61B2 of the second inner lens 61B disposed on the back side of the second light control surface 41B1.

In the embodiments described above, the vehicular lamps 10, 10A, 10B, and 10C each including a tail lamp of the vehicle V have been described by way of examples.
However, the present invention is applicable not only to tail lamps, but also to any lamp which is disposed across two mutually movable members. For example, the present invention is applicable to lamps for other purposes such as marker lamps including stop lamps, clearance lamps, and headlamps.

## Claims

1. A vehicular lamp comprising a first lamp unit (20A) and a second lamp unit (20B) that are adjacent to each other with a gap (G) therebetween, wherein the first lamp unit (20A) includes:
a first lamp body (21A);
a first lens cover (22A) that covers a front side of the lamp in the first lamp body to form a first lamp chamber (S1) between the first lens cover and the first lamp body; and
a first light source (23A) disposed in the first lamp chamber (S1), the first lens cover (22A) includes:
a first emission surface (35A) from which light (L1) from the first light source (23A) is emitted;
a first connection portion (36A) extending toward the first lamp body (21A) and connected to the first lamp body; and
a first light control surface (41A) that is formed to be continuous with the first emission surface (35A) and emits the light from the first light source forward of the lamp,
the second lamp unit (20B) includes:
a second lamp body (21B);
a second lens cover (22B) that covers a front side of the lamp in the second lamp body (21B) to form a second lamp chamber (S2) between the second lens cover (22B) and the second lamp body (21B) and
a second light source (23B) disposed in the second lamp chamber,
the second lens cover (22B) includes:
a second emission surface (35B) from which light (L2) from the second light source is emitted;
a second connection portion (36B) extending toward the second lamp body and connected to the second lamp body; and
a second light control surface (41B) that is formed to be continuous with the second emission surface (35B), and emits the light from the second light source forward of the lamp, and the first light control surface (41A) and the second light control surface (41B) are disposed continuous with each other with the gap (G) therebetween, the first light control surface (41A) extending farther than the first connection portion (36A) in a direction toward the second light control surface (41B), the second light control surface (41B) extending farther than the second connection portion (36B) in a direction toward the first light control surface (41A);
**characterized by**
a first reflecting surface (42A) that reflects the light from the first light source toward the first light control surface (41A) is provided between the first connection portion (36A) and the first light control surface (41A) in the first lens cover (22A), and
a second reflecting surface (42B) that reflects the light from the second light source toward the second light control surface (41B) is provided between the second connection portion (36B) and the second light control surface (41B) in the second lens cover (22B).

2. The vehicular lamp according to claim 1, wherein a first groove portion (43A) is formed in a surface of the first connection portion (36A) facing the second lamp unit (20B), one of two side surfaces (44A,45A) of the first groove portion (43A) is a part of the first reflecting surface (42A), a second groove portion (42B) is formed in a surface of the second connection portion (36B) facing the first lamp unit, and one of two side surfaces (44B,45B) of the second groove portion (42B) is a part of the second reflecting surface (42B).

3. The vehicular lamp according to any one of claims 1 to 2, wherein the first lamp unit includes, in the first lamp chamber, a first light guide (51A) that guides the light of the first light source (23A) and emits the light forward of the lamp, a part of the light emitted from the first light guide reaches the first light control surface (41A), the second lamp unit includes, in the second lamp chamber, a second light guide (51B) that guides the light of the second light source (23B) and emits the light forward of the lamp, and a part of the light emitted from the second light guide reaches the second light control surface (41B).

4. The vehicular lamp according to claim 3, wherein
the first lens cover (22A) and the first light guide (51A) are integrally molded or fixed in close contact with each other, and
the second lens cover (22B) and the second light guide (51B) are integrally molded or fixed in close contact with each other.

5. The vehicular lamp according to claim 3 or 4, wherein
the first lens cover and the first light guide have different refractive indices, and
the second lens cover and the second light guide have different refractive indices.

6. The vehicular lamp according to any one of claims 3 to 5, wherein
the first lens cover and the first light guide have different colors, the color of the first light guide has a higher transmittance at a wavelength of the light emitted from the first light source than the color of the first lens cover,
the second lens cover and the second light guide have different colors, and the color of the second light guide has a higher transmittance at a wavelength of the light emitted from the second light source than the color of the second lens cover.

## Patentansprüche

1. Fahrzeugleuchte, die eine erste Leuchten-Einheit (20A) und eine zweite Leuchten-Einheit (20B) umfasst, die mit einem Zwischenraum (G) zwischen ihnen benachbart zueinander sind, wobei die erste Leuchten-Einheit (20A) enthält:
einen ersten Leuchten-Körper (21A);
eine erste Linsen-Abdeckung (22A), die eine Vorderseite der Leuchte in dem ersten Leuchten-Körper abdeckt, so dass eine erste Leuchten-Kammer (S1) zwischen der ersten Linsen-Abdeckung und dem ersten Leuchten-Körper gebildet wird; sowie
eine erste Lichtquelle (23A), die in der ersten Leuchten-Kammer (S1) angeordnet ist,
wobei die erste Linsen-Abdeckung (22A) enthält:
eine erste Emissions-Fläche (35A), über die Licht (L1) von der ersten Lichtquelle (23A) emittiert wird;
einen ersten Verbindungs-Abschnitt (36A), der sich auf den ersten Leuchten-Körper (21A) zu erstreckt und mit dem ersten Leuchten-Körper verbunden ist; sowie
eine erste Lichtsteuerungs-Fläche (41A), die so ausgebildet ist, dass sie sich an die erste Emissions-Fläche (35A) anschließt und das Licht von der ersten Lichtquelle von der Leuchte nach vorn emittiert,
wobei die zweite Leuchten-Einheit (20B) enthält:
einen zweiten Leuchten-Körper (21B);
eine zweite Linsen-Abdeckung (22B), die eine Vorderseite der Leuchte in dem zweiten Leuchten-Körper (21B) abdeckt, so dass eine zweite Leuchten-Kammer (S2) zwischen der zweiten Linsen-Abdeckung (22B) und dem zweiten Leuchten-Körper (21B) gebildet wird; sowie
eine zweite Lichtquelle (23B), die in der zweiten Leuchten-Kammer (S2) angeordnet ist,
wobei die zweite Linsen-Abdeckung (22B) enthält:
eine zweite Emissions-Fläche (35B), über die Licht (L2) von der zweiten Lichtquelle emittiert wird;
einen zweiten Verbindungs-Abschnitt (36B), der sich auf den zweiten Leuchten-Körper zu erstreckt und mit dem zweiten Leuchten-Körper verbunden ist; sowie
eine zweite Lichtsteuerungs-Fläche (41 B), die so ausgebildet ist, dass sie sich an die zweite Emissions-Fläche (35B) anschließt und das Licht von der zweiten Lichtquelle von der Leuchte nach vorn emittiert, und
die erste Lichtsteuerungs-Fläche (41A) und die zweite Lichtsteuerungs-Fläche (41B) im Anschluss aneinander mit dem Zwischenraum (G) zwischen ihnen angeordnet sind, wobei sich die erste Lichtsteuerungs-Fläche (41A) in einer Richtung auf die zweite Lichtsteuerungs-Fläche (41B) zu weiter erstreckt als der erste Verbindungs-Abschnitt (36A) und sich die zweite Lichtsteuerungs-Fläche (41B) in einer Richtung auf die erste Lichtsteuerungs-Fläche (41A) zu weiter erstreckt als der zweite Verbindungs-Abschnitt (36B);
**dadurch gekennzeichnet, dass**
eine erste reflektierende Fläche (42A), die das Licht von der ersten Lichtquelle auf die erste Lichtsteuerungs-Fläche (41A) zu reflektiert, sich zwischen dem ersten Verbindungs-Abschnitt (36A) und der ersten Lichtsteuerungs-Fläche (41A) in der ersten Linsen-Abdeckung (22A) befindet, und
eine zweite reflektierende Fläche (42B), die das Licht von der zweiten Lichtquelle auf die zweite Lichtsteuerungs-Fläche (41B) zu reflektiert, sich zwischen dem zweiten Verbindungs-Abschnitt (36B) und der zweiten Lichtsteuerungs-Fläche (41B) in der zweiten Linsen-Abdeckung (22B) befindet.

2. Fahrzeugleuchte nach Anspruch 1, wobei
ein erster Nut-Abschnitt (43A) in einer Fläche des ersten Verbindungs-Abschnitts (36A) ausgebildet ist, die der zweiten Leuchten-Einheit (20B) zugewandt ist, und eine von zwei Seitenflächen (44A, 45A) des ersten Nut-Abschnitts (43A) ein Teil der ersten reflektierenden Fläche (42A) ist,
ein zweiter Nut-Abschnitt (42B) in einer Fläche des zweiten Verbindungs-Abschnitts (36B) ausgebildet ist, die der ersten Leuchten-Einheit (20A) zugewandt ist, und eine von zwei Seitenflächen (44B, 45B) des zweiten Nut-Abschnitts (42B) ein Teil der zweiten reflektierenden Fläche (42B) ist.

3. Fahrzeugleuchte nach einem der Ansprüche 1 bis 2, wobei
die erste Leuchten-Einheit in der ersten Leuchten-Kammer einen ersten Lichtleiter (51A) enthält, der das Licht der ersten Lichtquelle (23A) leitet und das Licht von der Leuchte nach vorn emittiert, und dabei ein Teil des von dem ersten Lichtleiter emittierten Lichts die erste Lichtsteuerungs-Fläche (41A) erreicht,
die zweite Leuchten-Einheit in der zweiten Leuchten-Kammer einen zweiten Lichtleiter (51B) enthält, der das Licht der zweiten Lichtquelle (23B) leitet und das Licht von der Leuchte nach vorn emittiert, und dabei ein Teil des von dem zweiten Lichtleiter emittierten Lichts die zweite Lichtsteuerungs-Fläche (41B) erreicht.

4. Fahrzeugleuchte nach Anspruch 3, wobei
die erste Linsen-Abdeckung (22A) und der erste Lichtleiter (51A) integral geformt oder in engem Kontakt miteinander befestigt sind, und
die zweite Linsen-Abdeckung (22B) und der zweite Lichtleiter (51B) integral geformt oder in engem Kontakt miteinander befestigt sind.

5. Fahrzeugleuchte nach Anspruch 3 oder 4, wobei
die erste Linsen-Abdeckung und der erste Lichtleiter unterschiedliche Brechungsindizes haben, und
die zweite Linsen-Abdeckung und der zweite Lichtleiter unterschiedliche Brechungsindizes haben.

6. Fahrzeugleuchte nach einem der Ansprüche 3 bis 5, wobei
die erste Linsen-Abdeckung und der erste Lichtleiter unterschiedliche Farben haben, und dabei die Farbe des ersten Lichtleiters einen höheren Durchlässigkeitsgrad bei einer Wellenlänge des von der ersten Lichtquelle emittierten Lichts hat als die Farbe der ersten Linsen-Abdeckung,
die zweite Linsen-Abdeckung und der zweite Lichtleiter unterschiedliche Farben haben, und dabei die Farbe des zweiten Lichtleiters einen höheren Durchlässigkeitsgrad bei einer Wellenlänge des von der zweiten Lichtquelle emittierten Lichts hat als die Farbe der zweiten Linsen-Abdeckung.

## Revendications

1. Lampe de véhicule comprenant une première unité de lampe (20A) et une seconde unité de lampe (20B) qui sont adjacentes l'une par rapport à l'autre avec un espace (G) entre elles, dans laquelle la première unité de lampe (20A) comprend :
un premier corps de lampe (21A) ;
un premier couvercle de lentille (22A) qui recouvre un côté avant de la lampe dans le premier corps de lampe afin de former une première chambre de lampe (S1) entre le premier couvercle de lentille et le premier corps de lampe ; et
une première source de lumière (23A) disposée dans la première chambre de lampe (S1), le premier couvercle de lentille (22A) comprend :
une première surface d'émission (35A) à partir de laquelle la lumière (L1) provenant de la première source de lumière (23A) est émise ;
une première partie de raccordement (36A) s'étendant vers le premier corps de lampe (21A) et raccordée au premier corps de lampe ; et
une première surface de commande de lumière (41A) qui est formée pour être continue avec la première surface d'émission (35A) et émet la lumière provenant de la première source de lumière vers l'avant de la lampe, la seconde unité de lampe (20B) comprend :
un second corps de lampe (21B) ;
un second couvercle de lentille (22B) qui recouvre un côté avant de la lampe dans le second corps de lampe (21B) pour former une seconde chambre de lampe (S2) entre le second couvercle de lentille (22B) et le second corps de lampe (21B), et
une seconde source de lumière (23B) disposée dans la seconde chambre de lampe,
le second couvercle de lentille (22B) comprend :
une seconde surface d'émission (35B) à partir de laquelle la lumière (L2) provenant de la seconde source de lumière, est émise ;
une seconde partie de raccordement (36B) s'étendant vers le second corps de lampe et raccordée au second corps de lampe ; et
une seconde surface de commande de lumière (41b) qui est formée pour être continue avec la seconde surface d'émission (35B), et émet la lumière provenant de la seconde source de lumière vers l'avant de la lampe, et la première surface de commande de lumière (41A) et la seconde surface de commande de lumière (41B) sont disposées de manière continue l'une par rapport à l'autre avec l'espace (G) entre elles, la première surface de commande de lumière (41A) s'étendant plus loin que la première partie de raccordement (36A) dans une direction allant vers la seconde surface de commande de lumière (41B), la seconde surface de commande de lumière (41B) s'étendant plus loin que la seconde partie de raccordement (36B) dans une direction vers la première surface de commande de lumière (41A) ;
**caractérisée par** :
une première surface réfléchissante (42A), qui reflète la lumière provenant de la première source de lumière vers la première surface de commande de lumière (41A), est prévue entre la première partie de raccordement (36A) et la première surface de commande de lumière (41A) dans le premier couvercle de lentille (22A), et
une seconde surface réfléchissante (42B), qui reflète la lumière provenant de la seconde source de lumière vers la seconde surface de commande de lumière (41B), est prévue entre la seconde partie de raccordement (36B) et la seconde surface de commande de lumière (41B) dans le second couvercle de lentille (22B).

2. Lampe de véhicule selon la revendication 1, dans laquelle :
une première partie de rainure (43A) est formée dans une surface de la première partie de raccordement (36A) faisant face à la seconde unité de lampe (20B), l'une des deux surfaces latérales (44A, 45A) de la première partie de rainure (43A) fait partie de la première surface réfléchissante (42A),
une seconde partie de rainure (42B) est formée dans une surface de la seconde partie de raccordement (36B) faisant face à la première unité de lampe, et l'une des deux surfaces latérales (44B, 45B) de la seconde partie de rainure (42B) fait partie de la seconde surface réfléchissante (42B).

3. Lampe de véhicule selon l'une quelconque des revendications 1 à 2, dans laquelle :
la première unité de lampe comprend, dans la première chambre de lampe, un premier guide de lumière (51A) qui guide la lumière de la première source de lumière (23A) et émet la lumière vers l'avant de la lampe, une partie de la lumière émise à partir du premier guide de lumière atteint la première surface de commande de lumière (41A),
la seconde unité de lampe comprend, dans la seconde chambre de lampe, un second guide de lumière (51B) qui guide la lumière de la seconde source de lumière (23B) et émet la lumière vers l'avant de la lampe, et une partie de la lumière émise à partir du second guide de lumière atteint la seconde surface de commande lumière (41B).

4. Lampe de véhicule selon la revendication 3, dans laquelle :
le premier couvercle de lentille (22A) et le premier guide de lumière (51A) sont moulés de manière solidaire ou fixés en contact immédiat entre eux, et
le second couvercle de lentille (22B) et le second guide de lumière (51B) sont moulés de manière solidaire ou fixés en contact immédiat entre eux.

5. Lampe de véhicule selon la revendication 3 ou 4, dans laquelle :
le premier couvercle de lentille et le premier guide de lumière ont des indices de réfraction différents, et
le second couvercle de lentille et le second guide de lumière ont des indices de réfraction différents.

6. Lampe de véhicule selon l'une quelconque des revendications 3 à 5, dans laquelle :
le premier couvercle de lentille et le premier guide de lumière ont des couleurs différentes, la couleur du premier guide de lumière a une transmittance plus importante, à une longueur d'onde de la lumière émise à partir de la première source de lumière, que la couleur du premier couvercle de lentille,
le second couvercle de lentille et le second guide de lumière ont des couleurs différentes, la couleur du second guide de lumière a une transmittance plus importante, à une longueur d'onde de la lumière émise à partir de la seconde source de lumière, que la couleur du second couvercle de lentille.
